# EUROPEAN PATENT APPLICATION

(11) **EP 1 492 351 A1**
(43) Date of publication of application: **29.12.2004**
(21) Application number: 03014770.6
(22) Date of filing: 27.06.2003
(51) Int. Cl.: H04N 7/26, H04N 7/50, H04N 7/24, H04N 7/30, G06T 9/00

(54) **Method and system to transmit and receive foreground/background segmented images in DVB/MHP systems**

(71) Applicant: Sony NetServices GmbH, 5081 Anif (AT)
(72) Inventor: Danzl, Christof, 5081 Anif (AT); Tripp, Markus, 5081 Anif (AT); Doppelmeier, Christoph, 5081 Anif (AT); Haisle, Karl, 5081 Anif (AT)
(74) Representative: Görz, Ingo

(57) **Abstract**

True-colour images are transmitted in ITV systems by disassembling an image frame into background and foreground image elements, and providing background and foreground image elements that are changed in respect to background and foreground image elements of a preceding image frame to a data carousel generator (4) and/or a data server (11). These true-colour images are received in ITV systems by receiving background and foreground image elements that are changed in respect to received background and foreground image elements of a preceding image frame from a data carousel decoder (7) and/or a data server (11), and assembling an image frame from the received background and foreground image elements.

## Description

The present invention relates to methods to transmit and to receive true-colour images in ITV (Interactive TV) or DTV (Digital TV) systems (in the following just referred to as ITV), such as DVB/MHP (Digital Video Broadcast / Multimedia Home Platform) systems. Further, the present invention relates to an ITV service providing system, such as a data broadcast or a data server system, and an ITV receiver. In particular, the present invention relates to an efficient transmission and rendering of true-colour images in ITV systems.

The following references are included into this specification by reference:
- [1] ETSI TS 101 812 V1.2.1: Multimedia Home Platform (MHP) Specification 1.0.2
- [2] ISO/IEC 13818-2: Information Technology - Generic coding of moving pictures and associated audio information - Part 2: Video (MPEG-2 Video)

Today's ITV systems do not support true-colour applications adequately, i.e. applications using over 16 million colours. However, to meet user requirements, such true-colour image support is needed.

Applications for an ITV platform, such as DVB/MHP, significantly gain value through the use of true-colour images, either as (static) part of a graphical user interface, or as some form of (static or dynamic) visual content. For example, the following visual elements commonly found in ITV applications require true-colour support:
- photographs (both raw and processed),
- most visual effects in graphics design,
- smoothened text fonts, and
- colour gradients.

However, ITV standards, such as the MHP standard impose restrictions on the use of images with a high colour depth, which makes the use of such images difficult and inefficient in many situations. The MHP standard specifies the following minimum capabilities for an MHP-compliant STB (Settop-Box):
- the visible TV image is a superimposition of a background plane, a video plane (reserved for the digital TV stream), and a graphics plane (foremost plane)
- the background plane must support the MPEG I-frame media type (fullscreen true-colour images of the size 720x576)
- the graphics plane only needs to support a restricted set of colours (a colour lookup table with 139 opaque colours)
- the video plane must support the "MHP Video Dripfeed" media type (fullscreen true-colour images in MPEG I-Frame or P-Frame format)

This implies the following restrictions:
- no true-colour images can be displayed on top of video streams (unless the video area is fully covered, in which case the video plane can be disabled)
- the MHP graphics API cannot be used for accurately displaying true-colour images (the number of distinct colours is automatically reduced from 16777216 colours to 139 colours)
- MPEG Video Dripfeeds interfere with the presentation of the TV Video Stream
- true-colour images have to be provided as MPEG I-Frames or MPEG Video Dripfeeds
- true-colour images can only be displayed in fullscreen size (720x576 pixels)

Therefore, it is the object underlying the present invention to provide a system to overcome the above shortcomings in displaying true-colour images in ITV systems.

This object is solved by methods to transmit and to receive true-colour images in ITV systems according to the present invention as defined in independent claims 1 and 12, respectively, an ITV service providing system according to the present invention as defined in independent claim 28 and an ITV receiver according to the present invention as defined in independent claim 32. The respectively following dependent claims define respective preferred embodiments of the independent claims to which they refer. Claim 26 defines a computer program product according to the present invention and claim 27 defines a computer readable storage means according to the present invention.

The method to transmit true-colour images in ITV systems, according to the present invention comprises the following steps: disassembling an image frame into background and foreground image elements; and providing background and foreground image elements that are changed in respect to background and foreground image elements of a preceding image frame to a data carousel generator and/or a data server.

The method to receive true-colour images in ITV systems, according to the present invention comprises the following steps: receiving background and foreground image elements that are changed in respect to received background and foreground image elements of a preceding image frame from a data carousel decoder and/or a data server; and assembling an image frame from the received background and foreground image elements.

The ITV service providing system according to the present invention comprises a pre-processing unit for disassembling an image frame into background and foreground image elements to be separately provided to a data carousel generator and/or a data server.

The ITV receiver according to the present invention comprises a re-assembly unit for assembling an image frame from background and foreground image elements received from a data carousel decoder and/or a data server.

Therefore, the proposed true-colour image rendering system for ITV, e.g. MHP, according to the present invention is able to achieve the following technical features, in particular also as set out in connection with the preferred embodiments described below:
- R-1: interoperability (e.g. compatibility with any MHP-compliant system),
- R-2: accurate reproduction of true-colour images on the TV screen,
- R-3: no interference with the presentation of the TV video stream,
- R-4: support for common true-colour image formats (e.g. JPEG),
- R-5: support for different image dimensions (width / height),
- R-6: random positioning of the images on the screen,
- R-7: no redundant data in the video broadcast in case of transmission via a data carousel, i.e. the provision of the background and foreground image elements to a data carousel generator, and/or no redundant data in the file download in case of a transmission via a data server, i.e. the provision of the background and foreground image elements to a data server, to use the scarce bandwidth most efficiently,
- R-8: minimum processing requirements for the STB, and
- R-9: minimum memory requirements for the STB.

The system requirement (R-1) implicates that the technical solution should be based on the respective ITV, e.g. MHP, minimum platform capabilities, e.g. as set out in the above reference [1]. In order to accurately reproduce true-colour images as postulated by (R-2), either the video plane (MPEG Dripfeeds) or the background plane (MPEG-I frames) should to be utilized. Requirement (R-3) indicates that MPEG Video Dripfeeds are not the preferred solution as a candidate for rendering true-colour images and that the MPEG I-frames are preferably used as the possible media type for true-colour images.

The method to transmit true-colour images in ITV systems according to the present invention preferably comprises the additional step of converting an application screen into the image frame, in particular an MPEG-I frame. This preferably performed step enables to use any format for the application screen to achieve the advantages of the method according to the present invention, which performs a processing on basis of image frames.

In the method to transmit true-colour images in ITV systems according to the present invention additionally or alternatively preferably said disassembling is performed at a level of pixel blocks, in particular MPEG macroblocks (16x16 pixels). The disassembling based on pixel blocks guarantees a reduced needed processing power, in particular for the re-assembly of the image frame disassembled in this way.

In the method to transmit true-colour images in ITV systems according to the present invention additionally or alternatively preferably logical groups of said pixel blocks, which form said background and foreground image elements, are byte-aligned. The building of a byte-aligned structure further reduces the needed processing power, since due to this feature the complexity of the assembling process is reduced.

In the method to transmit true-colour images in ITV systems according to the present invention additionally or alternatively preferably said background and foreground image elements are input into said data carousel generator and/or said data server in a format so that direct random access to groups of adjacent pixel blocks after the transmission is possible. This feature offers a particular easy possibility to exchange single image elements of an application screen and to keep other static or currently static image elements displayed.

In the method to transmit true-colour images in ITV systems according to the present invention additionally or alternatively preferably said background and foreground image elements are transmitted as regular data files.

In the method to transmit true-colour images in ITV systems according to the present invention additionally or alternatively preferably a sliced image frame is generated that comprises one slice per line for each image line comprising only background image information and a number of sub-slices per line for each image line comprising background and foreground image elements, wherein the number of sub-slices depends on the number and position of the foreground image elements in the respective image line and wherein a slice defines a number of consecutive pixel blocks in an image line. The sub-slices are generated by inserting a slice header, in particular an MPEG-2 compliant slice header, before the start of the first macroblock of the sub-slice.

In this embodiment of the method to transmit true-colour images in ITV systems according to the present invention additionally or alternatively preferably said background and foreground image elements are generated from said sliced image frame.

In the method to transmit true-colour images in ITV systems according to the present invention additionally or alternatively preferably a background element is a full screen image, preferably compatible with normal MPEG I-frames.

In the method to transmit true-colour images in ITV systems according to the present invention additionally or alternatively preferably a foreground element has an arbitrary size and position on the screen.

In the method to transmit true-colour images in ITV systems according to the present invention additionally or alternatively preferably a background element is a part of the image frame that gets changed with a first frequency and. a foreground element is a part of the image frame that gets changed with a second frequency, wherein the second frequency is higher than the first frequency.

The method to receive true-colour images in ITV systems according to the present invention preferably comprises the additional step of displaying said image frame, in particular an MPEG-I frame, in a background plane, in particular as specified in the MHP specification. Therefore, according to this preferred feature, the graphics plane that is intended to be used for ITV applications is not used anymore, but the applications are displayed in the background plane. This has the advantages that the colours are not restricted by the MHP graphics API and the presentation of application does not interfere with the DVB video stream. Since only changing image elements, i.e. background and/or foreground elements are transmitted, no redundant data is transmitted and the available bandwidth is sufficient for true-colour support.

In the method to receive true-colour images in ITV systems according to the present invention preferably said assembling comprises a specification of a desired background element and a number of foreground elements to be combined to a true-colour image frame.

In the method to receive true-colour images in ITV systems according to the present invention preferably said assembling comprises an initialisation of said specified background element and number of foreground elements.

In a preferred embodiment of the method to receive true-colour images in ITV systems according to the present invention preferably said initialisation comprises a specification of byte arrays containing image data of the background element and number of foreground elements.

In said preferred embodiment of the method to receive true-colour images in ITV systems according to the present invention further preferably said initialisation comprises a construction of a slice index table for each background element and number of foreground elements, which tables enumerate all slices for the background element and number of foreground elements, respectively, wherein a composite sliced image frame, which comprises all background and foreground elements of an image frame to be displayed, comprises one slice per line for each image line comprising only background image information and a number of sub-slices per line for each image line comprising background and foreground image elements, wherein the number of sub-slices depends on the number and position of the foreground image elements in the respective image line and wherein a slice defines a number of consecutive pixel blocks in an image line.

In said preferred embodiment of the method to receive true-colour images in ITV systems according to the present invention still further preferably a respective slice index table comprises N arrays of S(r) slice information records, where N is the number of rows of pixels or pixel blocks, in particular MPEG macroblocks, and S(r) the number of slices in row r.

In said preferred embodiment of the method to receive true-colour images in ITV systems according to the present invention still further preferably a respective slice information record comprises an offset value indicating an index of a first byte of the corresponding slice in the corresponding byte array, a length value indicating a number of bytes of the corresponding slice, and a blocks value indicating a number of pixel blocks covered by the corresponding slice.

In said preferred embodiment of the method to receive true-colour images in ITV systems according to the present invention still further preferably a slice information record of a background element additionally comprises a prefix length indicating a number of bytes preceding a first slice of the image frame, and a suffix length indicating a number of bytes following a last slice of the image frame.

In said preferred embodiment of the method to receive true-colour images in ITV systems according to the present invention preferably said assembly comprises a creation of a slice mapping table for the composite image frame from all slice index tables of specified background element and number of foreground elements.

In said preferred embodiment of the method to receive true-colour images in ITV systems according to the present invention alternatively or additionally preferably said assembly comprises a merging of all slices of specified background element and number of foreground elements.

The method to receive true-colour images in ITV systems according to the present invention preferably comprises the additional step of releasing memory resources used for the assembling of the image frame from the received background and foreground image elements after said assembling.

The method to receive true-colour images in ITV systems according to the present invention or its preferred embodiments or preferred feature combinations is preferably used to receive true-colour images in ITV systems transmitted according to the method to transmit true-colour images in ITV systems according to the present invention or its preferred embodiments or preferred feature combinations.

The methods to transmit and/or to receive true-colour images in ITV systems according to the present invention or its preferred embodiments or preferred feature combinations are preferably directed to DVB/MHP systems.

The computer program product according to the present invention comprises computer program means adapted to perform the method steps as set-out above when being executed on a computer, digital signal processor or the like.

The computer readable storage means according to the present invention stores thereon a computer program product according to the present invention.

The ITV service providing system according to the present invention preferably further comprises a conversion unit for converting an application screen into the image frame, in particular an MPEG-I frame.

The ITV service providing system according to the present invention alternatively or additionally preferably further comprises a slicing unit for generating a sliced image frame that comprises one slice per line for each image line comprising only background image information and a number of sub-slices per line for each image line comprising background and foreground image elements, wherein the number of sub-slices depends on the number and position of the foreground image elements in the respective image line and wherein a slice defines a number of consecutive pixel blocks in an image line.

The ITV service providing system according to the present invention or its preferred embodiments is preferably a DVB/MHP broadcast system, in which said background and foreground image elements are preferably transmitted via a data carousel, which is generated for transmission by a data carousel generator and - after reception - decoded for further processing and/or access by a data carousel decoder, and/or a data server, such as an internet server.

The ITV receiver according to the present invention preferably further comprises a display for displaying said image frame, in particular an MPEG-I frame, in a background plane, in particular as specified in the MHP specification.

The ITV receiver according to the present invention alternatively or additionally preferably further comprises an output for outputting said image frame, in particular an MPEG-I frame, for display in a background plane, in particular as specified in the MHP specification.

The ITV receiver according to the present invention further alternatively or additionally preferably further comprises a construction unit for construction of a slice index table for each background element and number of foreground elements, which tables enumerate all slices for the background element and number of foreground elements, respectively, wherein a composite sliced image frame, which comprises all background and foreground elements of an image frame to be displayed, comprises one slice per line for each image line comprising only background image information and a number of sub-slices per line for each image line comprising background and foreground image elements, wherein the number of sub-slices depends on the number and position of the foreground image elements in the respective image line and wherein a slice defines a number of consecutive pixels or pixel blocks in an image line.

The ITV receiver according to the present invention still further alternatively or additionally preferably further comprises a mapping unit for creation of a slice mapping table for the image frame from all slice index tables of specified background element and number of foreground elements.

The ITV receiver according to the present invention still further alternatively or additionally preferably further comprises a merging unit for merging of all slices of specified background element and number of foreground elements.

The ITV receiver according to the present invention or its preferred embodiments is preferably a DVB/MHP receiver or settop-box, from which said background and foreground image elements are preferably received via a data carousel decoder and/or a data server, such as an internet server.

Therefore, in a particular preferred embodiment according to the invention, a system to transmit and to receive true-colour images in ITV systems, in particular DVB/MHP systems, consists of two sub-systems:
(1) a true-colour image preprocessing unit integrated with the service providing system, in particular the broadcast system, and
(2) a true-colour image re-assembly unit embedded in the consumer's settop-box.

The technical solution for displaying true-colour images according to this preferred embodiment is based on MPEG I-frames. However, MPEG I-frames as such have severe limitations:
- the MPEG-I media type is not supported by image editing tools (violates R-4),
- only fullscreen images are supported (violates R-5 and R-6), and
- the MPEG-I frames used for a particular application tend to contain identical image elements (e.g. common elements of the backdrop or the graphical user interface), increasing the overall application size (violates R-7).

According to this particular preferred embodiment of the present invention these limitations are overcome by the following technical approach:
1. Application screens containing true-colour images are composed from arbitrary input images and converted into MPEG-I frames using image manipulation/conversion tools or systems. This processing is performed in batch-mode by a content aggregation system.
2. The resulting MPEG-I frames are disassembled into background and foreground image elements, depending on the number of dynamic/common image elements. This processing is also done in batch-mode before the broadcast.
3. After loading the individual MPEG image elements from the data carousel in the broadcast, they are re-assembled in real-time into an MPEG I-frame and passed to the MHP system for display in the background plane. Compared to the alternative approach of pre-computing the MPEG I-frames and storing them in a cache, the "just-in-time" reassembly inside of the STB minimizes the RAM requirements (R-8), but leads to higher CPU utilization.
4. In order to minimize the processing complexity in the STB (R-8), the disassembly and re-assembly of the MPEG I-frames are not done at the pixel level, but at the level of MPEG macroblocks, each macroblock consisting of 16x16 pixels, resulting in 45x36 macroblocks per MPEG I-frame, as described in the above reference [2]. This approach yields a much higher processing speed than pixel-level image processing (real-time manipulation of compressed MPEG data at the pixel level would by far exceed the processing capabilities of current STB JVM's).
5. To further reduce the complexity of the assembly process, the internal structure of the generated MPEG I-frames is modified so that logical groups of macroblocks become byte-aligned. The MPEG image elements are stored in an exchange format, which enables direct random access to groups of adjacent macroblocks during re-assembly.

As mentioned above, the technical approach according to the particular preferred embodiment of the present invention lined out above implies two subsystems, which might be realized as software, namely a pre-processing system integrated with the broadcasting infrastructure and an image assembly system embedded in the MHP receiver or settop-box.

For a better understanding of the invention and to further elucidate the invention, its features, objects and advantages, the above outlined particular preferred embodiment is described in detail by way of example while making reference to the accompanying drawing, wherein:
- Fig. 1: shows a macroblock structure of a part of an MPEG I-frame including one background and two foreground image elements,
- Fig. 2: shows the slice structure of the image elements shown in fig. 1, and
- Fig. 3: shows a principal block diagram of a DVB/MHP broadcast and reception system according to the present invention.

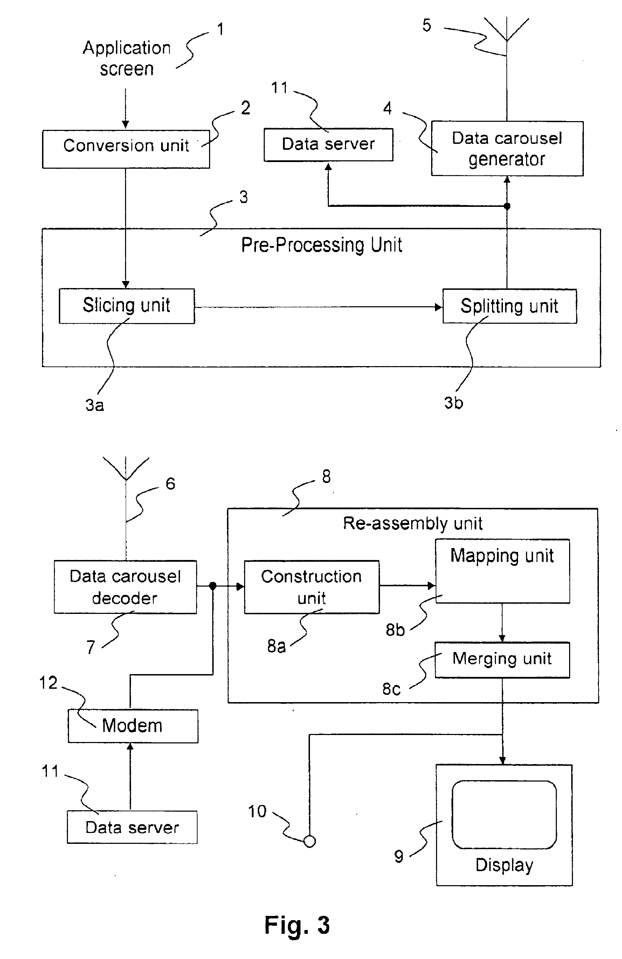

This described embodiment is realized in a software technology used to improve the graphics capabilities of settop-boxes implementing the Multimedia Home Platform (MHP) standard. This technical solution enhances the capabilities of the Multimedia Home Platform without sacrificing interoperability, because it is implemented in the Java programming language using only MHP APIs. Of course, the single software elements could also be realized in hardware, as indicated in fig. 3.

In the following the details of the process, i.e. image disassembly, image exchange format, and re-assembly, are explained. First, details of the pre-processing technique performed on the broadcast side are described.

### I) Creation of background I-frames

Every screen containing true-colour foreground images also requires a fullscreen (720x576 pixels) background image (in order to construct a fullscreen MPEG I-frame). This image can be provided in any standardized true-colour image format and is automatically converted to an MPEG I-frame, e.g. using dedicated software, which might be supplied by any third party.

### II) Creation of foreground I-frames

Foreground true-colour images do not occupy the full screen area, but have a certain size and position on the screen. In order to obtain a fullscreen I-frame, a composite image is created from the foreground image and the corresponding background image. The composite image is then converted to an MPEG I-frame using dedicated software, which might be supplied by any third party.

If all the image coordinates and dimensions are multiples of 16. i.e. the size of a macroblock, the image is "macroblock-aligned" and can be pre-processed/re-assembled using any background. Otherwise, a foreground element is tied to a certain background and a certain position on the screen.

### III) Alignment of macroblocks in the I-frames

Macroblocks are encoded as bit sequences inside an MPEG bitstream, and are only bytealigned at the beginning of a slice, i.e. a sequence of consecutive macroblocks in the same scan row. Usual MPEG encoders typically generate only 1 slice per row, which means that only full rows of 45 macroblocks are byte-aligned by default, and that the extraction/assembly of contained macroblock groups is computationally very complex. In order to reduce the processing requirements for the macroblock extraction and assembly, every line containing macroblocks from a foreground image is divided into sub-slices according to the horizontal position and width of the image.

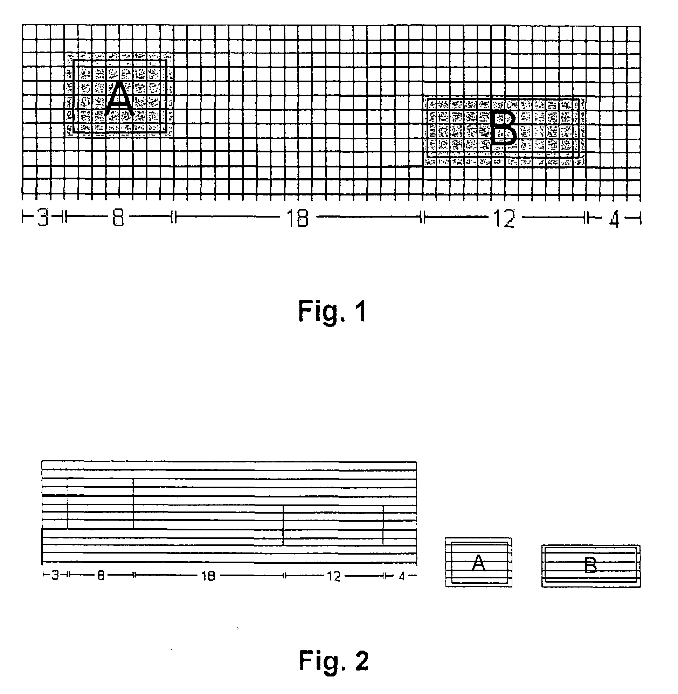

For example, Figure 1 shows the macroblock structure of an I-frame (only the upper third of the frame is shown) with a first left foreground image element A and a second right foreground image element B, which are indicated by grey areas containing rectangles and the respective markings A and B. The rectangles indicate the boundaries of the "net" foreground image information.

The upper left corner of the left image element A is the fourth macroblock in the horizontal direction and the third macroblock in the vertical direction. The upper right corner of the left image element A is the eleventh macroblock in the horizontal direction and the third macroblock in the vertical direction. The lower left corner of the left image element A is the fourth macroblock in the horizontal direction and the eighth macroblock in the vertical direction. The lower right corner of the left image element A is the eleventh macroblock in the horizontal direction and the eighth macroblock in the vertical direction.

The upper left corner of the right image element B is the thirtieth macroblock in the horizontal direction and the sixth macroblock in the vertical direction. The upper right corner of the right image element B is the forty-first macroblock in the horizontal direction and the sixth macroblock in the vertical direction. The lower left corner of the right image element B is the thirtieth macroblock in the horizontal direction and the tenth macroblock in the vertical direction. The lower right corner of the right image element B is the thirtieth macroblcck in the horizontal direction and the tenth macroblock in the vertical direction.

In this example, e.g. the 6th row of macroblocks is split into 5 sub-slices, containing 3, 8, 18, 12, and 4 macroblocks, respectively. This is accomplished with an MPEG-2 video frame parser, e.g. implemented in Java. It analyzes the MPEG-2 bitstream, identifies the bit position of the first macroblock for every designated sub-slice, i.e. performs a slicing, and creates the sub-slice by inserting the slice header into the bitstream at the appropriate position.

For foreground I-frames, the slice structure is defined solely by the geometry, i.e. position and dimension, of the corresponding foreground images. For a background frame, the slice structure is defined by the set of geometries of the associated foreground images.

### IV) Construction of MPEG image elements

The modified I-frames with additional slice headers at the image boundaries are referred to as "sliced" I-frames. The background and foreground image elements are constructed from sliced I-frames according to the exchange format specified in the following section, i.e. a splitting of the sliced I-frame is performed. This is the final step of the pre-processing; the MPEG image elements are broadcast as regular data files in a DVB data carousel.

The data structures used to represent background and foreground image elements can vary, but preferably there is a clearly defined exchange format in the form of a file format definition. The file extension used for MPEG-2 background elements could be ".bg2" and for foreground elements ".fg2".

Multi-byte numbers occurring in the byte sequence are stored in big-endian mode, i.e. the most significant byte first.

Background elements are preferably transferred as regular MPEG-2 video files with the following special characteristics:
- the MPEG video sequence contains exactly one I-frame,
- one row may contain multiple slices, which is explicitly allowed by the MPEG standard,
- the image data is preceded by an MPEG-2 user data segment containing metadata about the slices contained in the image, e.g. for each slice: byte offset, length in byte, and number of macroblocks, as defined below:

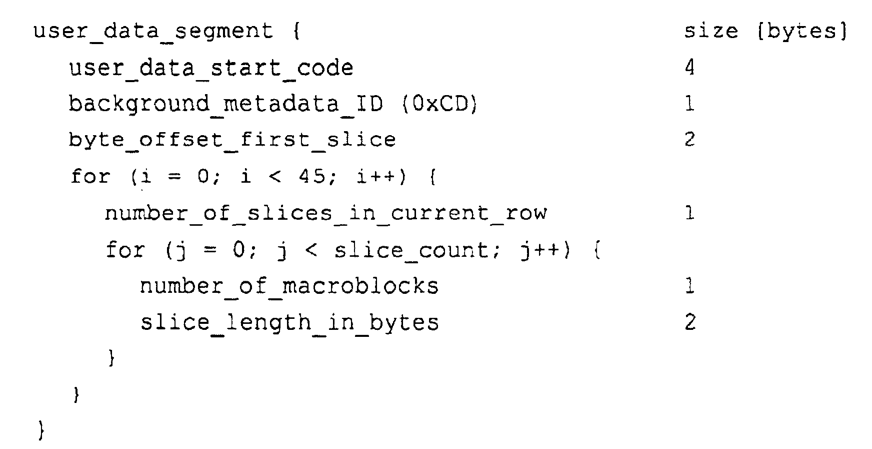

The slice metadata stored in the user data segment allow direct access to each of the slices without parsing the entire file.

Foreground elements are preferably transferred as binary data files with the following structure:

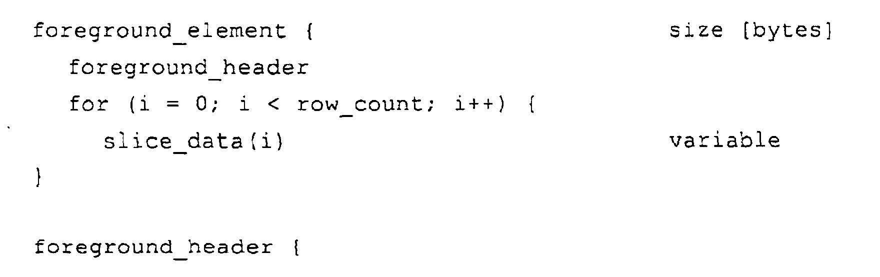

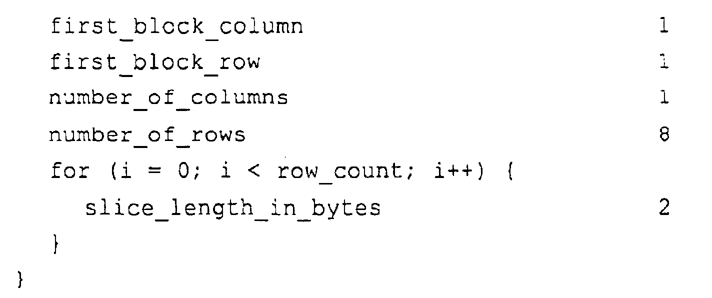

The information contained in the header is necessary for identifying the slice boundaries in the byte sequence, and for the proper integration of the foreground element with the background.

### V) Details of the I-Frame Assembly Process

Due to the comprehensive pre-processing and the efficient file exchange format, the assembly process in the STB is very lean and fast. From the application programmer's perspective, the assembly can be performed with a few simple steps.

An MPEG I-Frame Assembly API could be defined as described in the following.

In an MHP application, a composed true-colour image is defined and displayed using the following procedure:
1. Specify the desired background element plus any number of foreground elements to be combined to a true-colour MPEG I-frame (each element is identified by a file path):
   import com.sony.sns.mhp.patch.*;
   Backdrop backdrop = new
   Backdrop("/images/shades_of_blue.bg2");
   PatchFile logo = new PatchFile("/images/logo.fg2");
   PatchFile banner = new PatchFile("/images/bannerl.fg2");
   PatchFile sidebar = new PatchFile("/images/sidebar.fg2");
   Patchwork mainScreen = new Patchwork(backdrop);
   mainScreen.add(logo).add(sidebar).add(banner);
2. Initialize the elements by specifying byte arrays containing the image data. This can be handled via a utility function that implements the application's resource management policy, e.g. as shown in the following example: 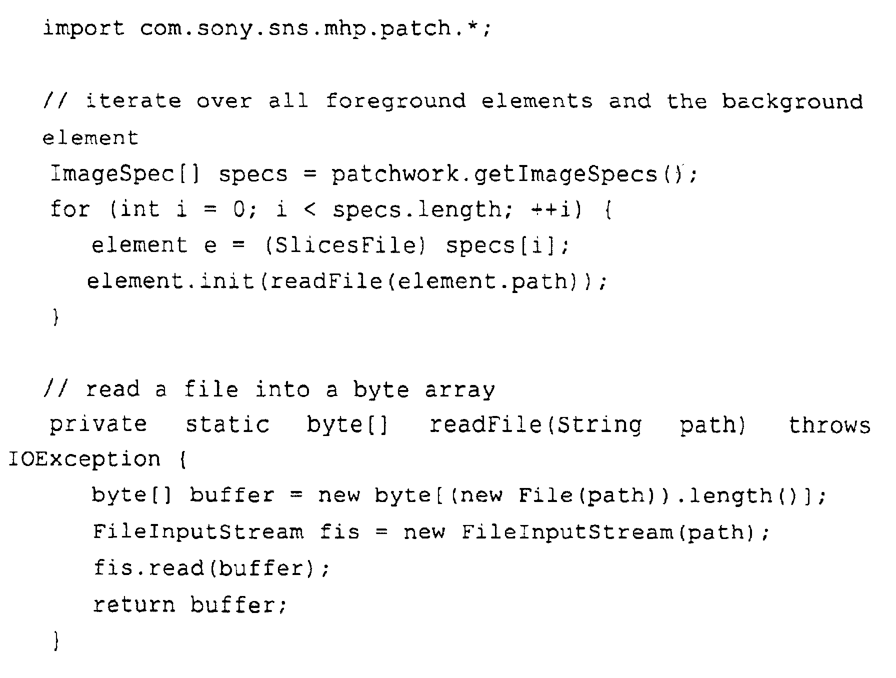
3. Initiate the actual I-frame assembly: 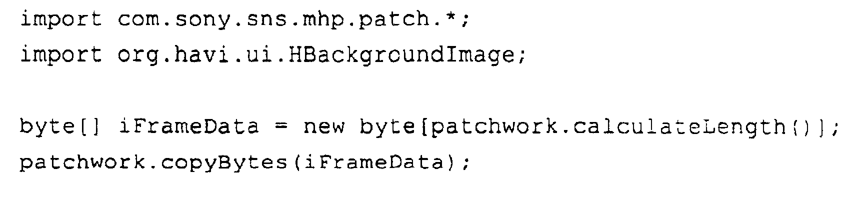 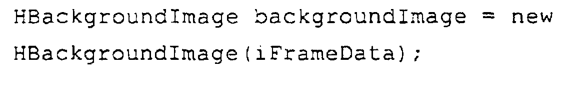
4. Display the HBackgroundImage object as specified in the above reference [1].
5. Release the allocated system resources:

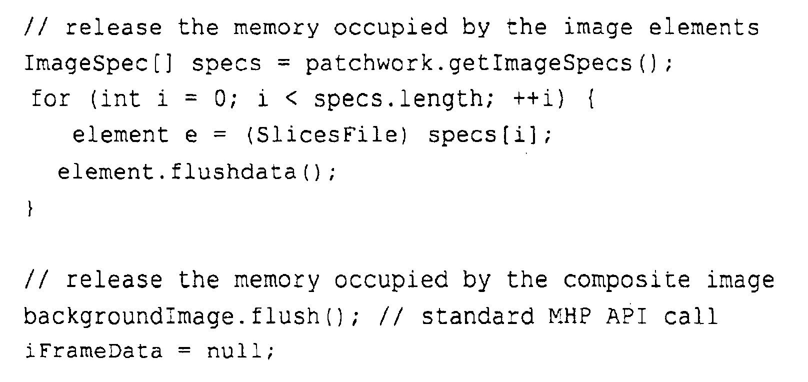

Steps 2 through 5 can be repeated when the same image configuration needs to be displayed again after a different HBackgroundImage has been displayed.

It is possible to replace a foreground element with a different MPEG element by invoking patchwork.replacePath(), followed by steps 2 through 4. This reduces the complexity of the application code when different foreground true-colour images need to be displayed on the same background, which is a common situation.

### VI) Implementation Details

### ad 1) Specification of the image elements

During the definition or the composed true-colour image, the logical names of the background and foreground elements are specified, but no image data are yet loaded into memory. Foreground elements can be added or replaced at any time after the creation of a "Patchwork" object based on a given "Backdrop" object (background element).

### ad 2) Initialization of the image elements

The detailed procurement of the byte array holding the background/foreground image data is beyond the scope of this application. For example, the raw image data could be directly loaded from a DVB data carousel or data server or be retrieved from a file cache.

During the initialization process, the metadata of the background and foreground elements are extracted from the byte array (by parsing user_data_segment, and foreground_header, respectively). From these metadata, a *slice_index* table is constructed for each Backdrop and PatchFile. It enumerates all slices for a. particular image element from top to bottom, left to right, and serves as an index for the image data of each slice.

This data structure consists of N arrays containing S(r) slice_info records, where N is the number of macroblock rows, and S the number of slices in row r. A slice_info record is a triplet(offset, length, blocks) with the following semantics:
- *offset* is the index of the first byte of this slice in the image data byte array
- *length* is the number of bytes of this slice (excluding the slice header)
- *blocks* is the number of macroblocks covered by this slice

This information is necessary, and sufficient to directly access the slice data of a Backdrop or PatchFile object, and to verify that the number of macroblocks is correct (without analyzing the slice data at the bit-level). See Annex A for an example.

For a background element, the following additional meta-information is prepared:
- *prefix length:* the number of bytes preceding the first slice of the I-frame
- *suffix length:* the number of bytes following the last slice of the I-frame

### ad 3) The actual I-Frame assembly process

The I-Frame assembly algorithm consists of two major steps:
- creation of a slice_mapping table for the whole image
- merging of the slice data from the elements into a single data buffer

The slice_mapping data structure consists of 36 arrays containing S(r) entries of the form (image_element, slice_info), where S(r) is the number of slices in row r. It enumerates all slices in the composite image from top to bottom, left to right, associating each slice with a reference to the corresponding image element (an example is shown in Annex A). The slice_mapping is computed by combining the slice_index information of the image elements.

The creation of the slice_mapping table is simplified, if only the content of some (foreground) image elements has changed since the last I-frame assembly, but not the image geometry. If neither the content, nor the geometry have changed, this step is skipped altogether.

Based on the slice_mapping table, the merging algorithm is straightforward:
1. Calculate the total length L of the resulting I-frame by adding the length information for all slices in the slice_mapping table, plus the prefix length and suffix length
2. Allocate a buffer with a size of L bytes (performed by the application)
3. Fill the buffer by copying the I-frame prefix (from the background element), followed by the slice data from the different image elements (according to the slice_mapping table), followed by the I-frame suffix (again, from the background element).

### ad 4) Display the I-Frame represented by the HBackgroundImage object

This is a standard operation covered by the MHP Specification, i.e. the above reference [1].

### ad 5) Release the allocated system resources

It is the responsibility of the application to release the data buffers reserved in step 2) and 3).

Figure 3 shows a principal block diagram of an ITV service provider system and ITV reception system according to the present invention.

On the service provider side, which is shown in the upper part of figure 3, an application screen 1 is input to a conversion unit 2 and converted into an MPEG I-frame, which is input to a pre-processing unit 3. Within the pre-processing unit 3, the MPEG I-frame is input to a slicing unit 3a, which determines the arrangement of slices and sub-slices within the MPEG I-frame, e.g. according to provisions of a graphics designer, and inserts slice headers for every sub-slice to generate the sliced I-frames, which are separated by a splitting unit 3b into the background and foreground image elements of the application screen. These background and foreground image elements are broadcast via a data carousel generator 4 and a broadcast antenna 5.

Alternatively or additionally, the background and foreground image elements might be "broadcasted" by making them available on a data server 11, which might be an internet server.

On the receiver side, which is shown in the lower part of figure 3, background and foreground image elements, which are received via a receiving antenna 6 and a data carousel decoder 7, are input to a re-assembly unit 8. In case of the above alternative or additional embodiment, the background and foreground image elements might be downloaded from the data server 11, e.g. via a modem 12. Within the re-assembly unit 8, a construction unit 8a constructs a slice index table for each received and to be used image element file. Then, based on these slice index tables, a following mapping unit 8b creates a slice mapping table for the whole I-frame to be re-assembled. Thereafter a merging is performed by a merging unit 8c based on this slice mapping table and the slice data to generate an I-frame corresponding to the specified to be used background and foreground image elements. This I-frame could be supplied to an output 10 and/or displayed on a display 9. In particular, it is to be noted that the receiver according to the present invention does not need to have display capabilities. Also receiving capabilities in the sense of receiving the broadcast signal through a cable or from the air are not necessarily needed, as long as the receiver according to the present invention receives the broadcasted data files from the data carousel decoder 7 and/or the data server 11. In other words, the receiver according to the present invention might be installed within a settop-box that might be connected between a broadcast signal receiver and a display.

### Abbreviations

- API: Application Programming Interface
- BG: Background Image Element
- CPU: Central Processing Unit
- DVB: Digital Video Broadcast
- DTV: Digital Television
- FG: Foreground Image Element
- ITV: Interactive Television
- JPEG: Joint Photographic Experts Group
- JVM: Java Virtual Machine
- MPEG: Motion Pictures Expert Group
- MHP: Multimedia Home Platform
- RAM: Random Access Memory
- STB: Settop-Box

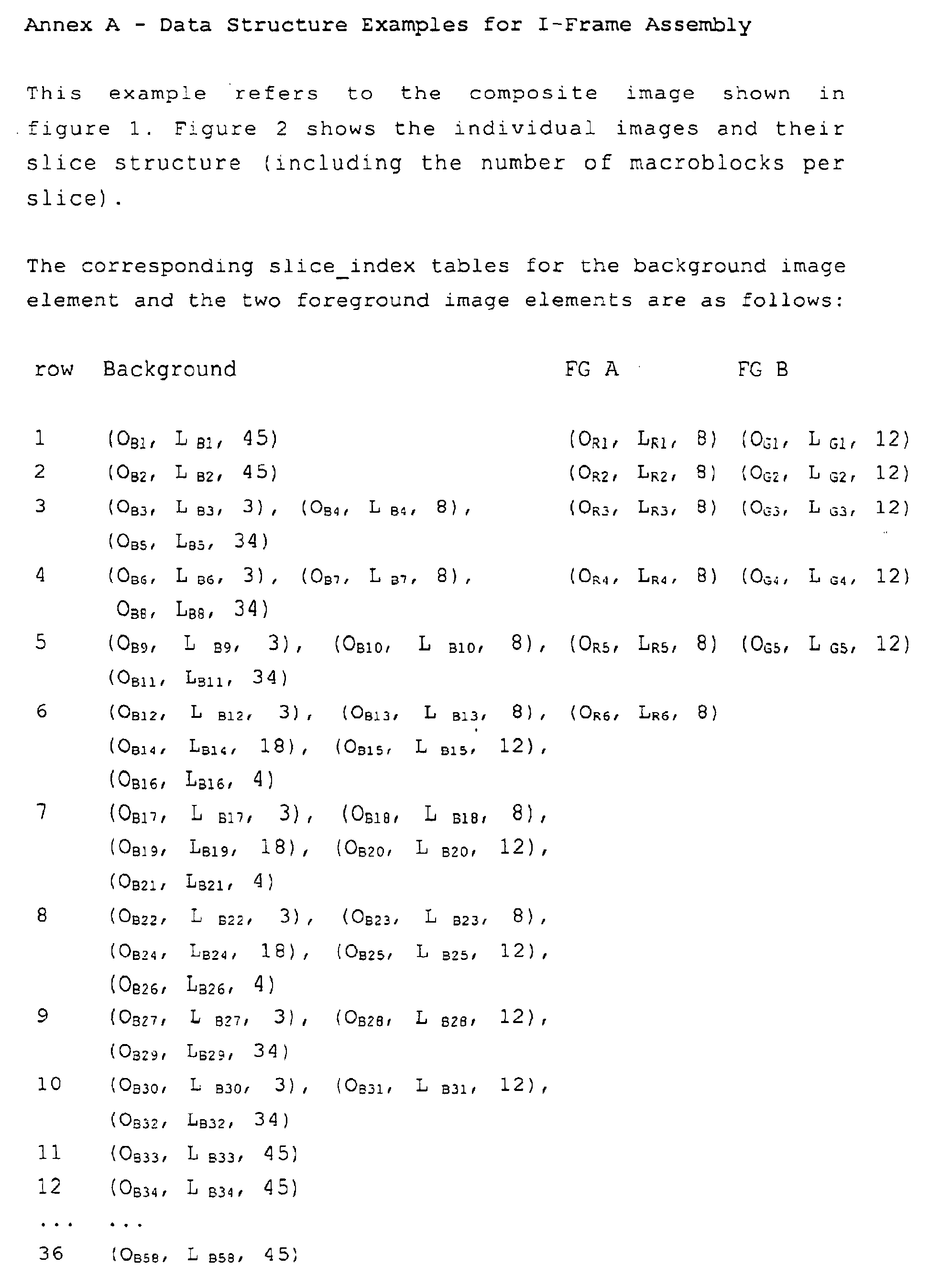

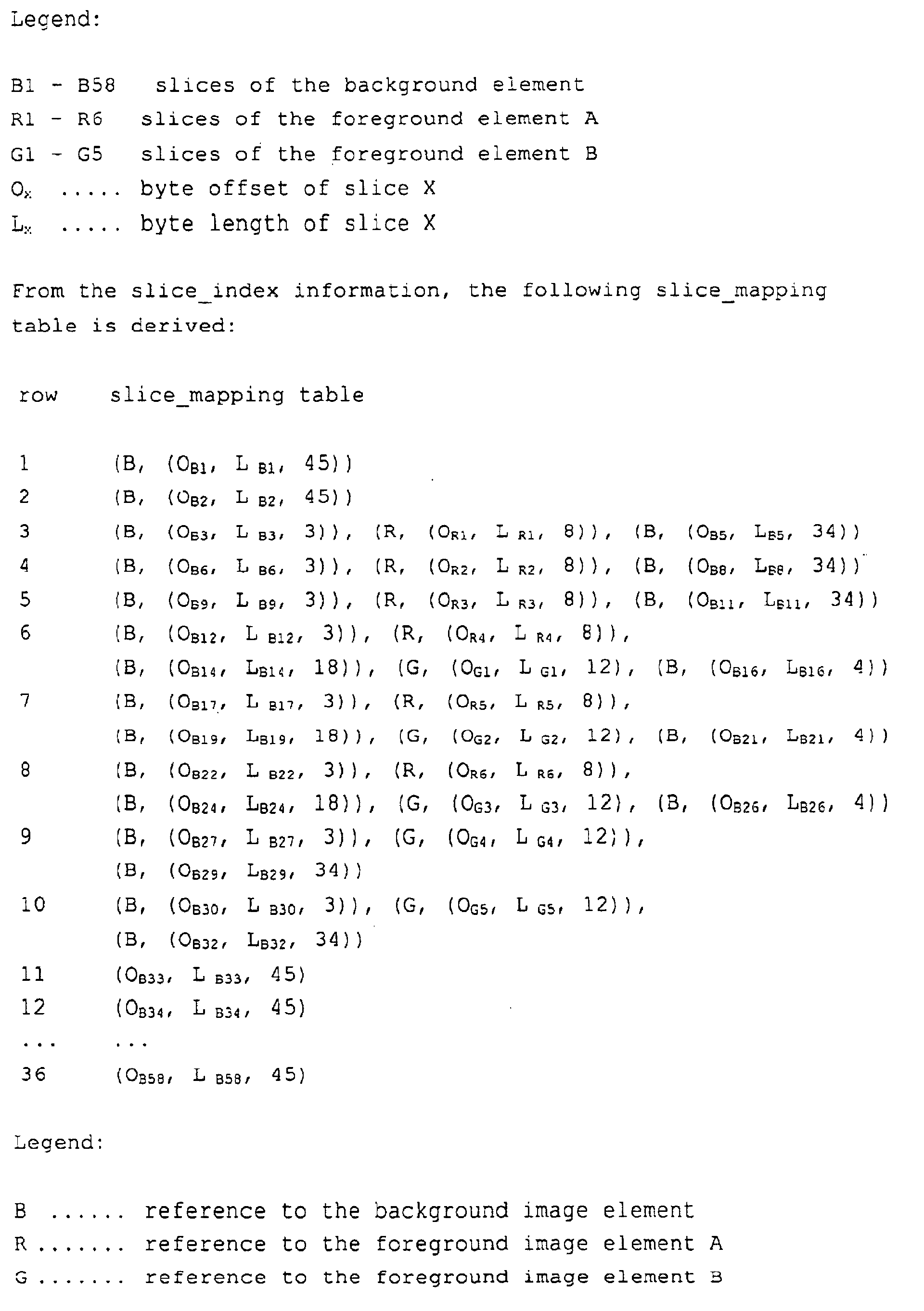

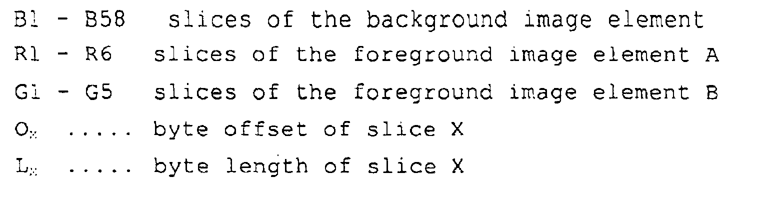

## Claims

1. Method to transmit true-colour images in ITV systems, **characterized by** the following steps:
- disassembling an image frame into background and foreground image elements; and
- providing background and foreground image elements that are changed in respect to background and foreground image elements of a preceding image frame to a data carousel generator (4) and/or a data server (11).

2. Method according to claim 1, **characterized by**
- converting an application screen into the image frame, in particular an MPEG-I frame.

3. Method according to claim 1 or 2, **characterized in that** said disassembling is performed at a level of pixel blocks, in particular MPEG macroblocks.

4. Method according to claim 3, **characterized in that** logical groups of said pixel blocks, which form said background and foreground image elements, are byte-aligned.

5. Method according to claim 3 or 4, **characterized in that** said background and foreground image elements are input into said data carousel generator (4) and/or said data server (11) in a format so that direct random access to groups of adjacent pixel blocks after the transmission is possible.

6. Method according to anyone of the preceding claims, **characterized in that** said background and foreground image elements are transmitted as regular data files.

7. Method according to anyone of the preceding claims, **characterized in that** a sliced image frame is generated that comprises one slice per line for each image line comprising only background image information and a number of sub-slices per line for each image line comprising background and foreground image elements, wherein the number of sub-slices depends on the number and position of the foreground image elements in the respective image line and wherein a slice defines a number of consecutive pixel blocks in an image line.

8. Method according to claim 7, **characterized in that** said background and foreground image elements are generated from said sliced image frame.

9. Method according to anyone of the preceding claims, **characterized in that** a background element is a full screen image, preferably compatible with normal MPEG I-frames.

10. Method according to anyone of the preceding claims, **characterized in that** a foreground element represents a true-color image with an arbitrary size and position on the screen.

11. Method according to anyone of the preceding claims, **characterized in that** a background element is a part of the image frame that gets changed with a first frequency and a foreground element is a part of the image frame that gets changed with a second frequency, wherein the second frequency is higher than the first frequency.

12. Method to receive true-colour images in ITV systems, **characterized by** the following steps:
- receiving background and foreground image elements that are changed in respect to received background and foreground image elements of a preceding image frame from a data carousel decoder (7) and/or a data server (11); and
- assembling an image frame from the received background and foreground image elements.

13. Method according to claim 12, **characterized by**
- displaying said image frame, in particular an MPEG-I frame, in a background plane, in particular as specified in the MHP specification.

14. Method according to claim 11 or 12, **characterized in that** said assembling comprises a specification of a desired background element and a number of foreground elements to be combined to a true-colour image frame.

15. Method according to claim 14, **characterized in that** said assembling comprises an initialisation of said specified background element and number of foreground elements.

16. Method according to claim 15, **characterized in that** said initialisation comprises a specification of byte arrays containing image data of the background element and number of foreground elements.

17. Method according to claim 16, **characterized in that** said initialisation comprises a construction of a slice index table for each background element and number of foreground elements, which tables enumerate all slices for the background element and number of foreground elements, respectively, wherein a composite sliced image frame, which comprises all background and foreground elements of an image frame to be displayed, comprises one slice per line for each image line comprising only background image information and a number of sub-slices per line for each image line comprising background and foreground image elements, wherein the number of sub-slices depends on the number and position of the foreground image elements in the respective image line and wherein a slice defines a number of consecutive pixel blocks in an image line.

18. Method according to claim 17, **characterized in that** a respective slice index table comprises N arrays of S(r) slice information records, where N is the number of rows of pixel blocks, in particular MPEG macroblocks, and S(r) the number of slices in row r.

19. Method according to claim 18, **characterized in that** a respective slice information record comprises an offset value indicating an index of a first byte of the corresponding slice in the corresponding byte array, a length value indicating a number of bytes of the corresponding slice, and a blocks value indicating a number of pixel blocks covered by the corresponding slice.

20. Method according to claim 19, **characterized in that** a slice information record of a background element additionally comprises a prefix length indicating a number of bytes preceding a first slice of the image frame, and a suffix length indicating a number of bytes following a last slice of the image frame.

21. Method according to anyone of claims 16 to 20, **characterized in that** said assembly comprises a creation of a slice mapping table for the composite image frame from all slice index tables of specified background element and number of foreground elements.

22. Method according to anyone of claims 16 to 21, **characterized in that** said assembly comprises a merging of all slices of specified background element and number of foreground elements.

23. Method according to anyone of claims 12 to 22, **characterized by** releasing memory resources used for the assembling of the image frame from the received background and foreground image elements after said assembling.

24. Method according to anyone of the preceding claims 12 to 23, **characterized in that** it is used to receive true-colour images in ITV systems transmitted according to anyone of claims 1 to 11.

25. Method according to anyone of the preceding claims, **characterized in that** said ITV systems comprise DVB/MHP systems.

26. Computer program product, comprising computer program means adapted to perform the method steps as defined in anyone of claims 1 to 25 when being executed on a computer, digital signal processor or the like.

27. Computer readable storage means, storing thereon a computer program product according to claim 26.

28. ITV service providing system, **characterized by** a pre-processing unit (3) for disassembling an image frame into background and foreground image elements to be separately provided to a data carousel generator (4) and/or a data server (11).

29. ITV service providing system according to claim 28, **characterized by** a conversion unit (2) for converting an application screen (1) into the image frame, in particular an MPEG-I frame.

30. ITV service providing system according to claim 28 or 29, **characterized by** a slicing unit (3a) for generating a sliced image frame that comprises one slice per line for each image line comprising only background image information and a number of sub-slices per line for each image line comprising background and foreground image elements, wherein the number of sub-slices depends on the number and position of the foreground image elements in the respective image line and wherein a slice defines a number of consecutive pixel blocks in an image line.

31. ITV service providing system according to anyone of claims 28 to 30, **characterized in that** it is a DVB/MHP system.

32. ITV receiver, **characterized by** a re-assembly unit (8) for assembling an image frame from background and foreground image elements received from a data carousel decoder (7) and/or a data server (11).

33. ITV receiver according to claim 32, **characterized by** a display (9) for displaying said image frame, in particular an MPEG-I frame, in a background plane, in particular as specified in the MHP specification.

34. ITV receiver according to claim 32 or 33, **characterized by** an output (10) for outputting said image frame, in particular an MPEG-I frame, for display in a background plane, in particular as specified in the MHP specification.

35. ITV receiver according to anyone of claims 32 to 34, **characterized by** a construction unit (8a) for construction of a slice index table for each background element and number of foreground elements, which tables enumerate all slices for the background element and number of foreground elements, respectively, wherein a composite sliced image frame, which comprises all background and foreground elements of an image frame to be displayed, comprises one slice per line for each image line comprising only background image information and a number of sub-slices per line for each image line comprising background and foreground image elements, wherein the number of sub-slices depends on the number and position of the foreground image elements in the respective image line and wherein a slice defines a number of consecutive pixel blocks in an image line.

36. ITV receiver according to claim 35, **characterized by** a mapping unit (b) for creation of a slice mapping table for the image frame from all slice index tables of specified background element and number of foreground elements.

37. ITV receiver according to anyone of claims 32 to 36, **characterized by** a merging unit (8c) for merging of all slices of specified background element and number of foreground elements.

38. ITV receiver according to anyone of claims 32 to 37, **characterized in that** it is a DVB/MHP receiver or settop-box.
